Europäisches Patentamt

European Patent Office

Office européen des brevets

(19)

(11) EP 0 616 411 B1

(12) **FASCICULE DE BREVET EUROPEEN**

(45) Date de publication et mention
de la délivrance du brevet:
**13.03.1996 Bulletin 1996/11**

(51) Int Cl.6: **H02J 7/10**

(21) Numéro de dépôt: **94400575.0**

(22) Date de dépôt: **16.03.1994**

(54) **Procédé de charge rapide d'une batterie et circuit integré pour la mise en oeuvre de ce procédé**

Schnelladeverfahren für Batterie und integrierter Schaltkreis zur Durchführung des Verfahrens

Quick charge method for battery and integrated circuit for performing the method

(84) Etats contractants désignés:
**DE FR GB IT**

(30) Priorité: **18.03.1993 FR 9303153**

(43) Date de publication de la demande:
**21.09.1994 Bulletin 1994/38**

(73) Titulaire: **SGS-THOMSON
MICROELECTRONICS S.A.
F-94250 Gentilly (FR)**

(72) Inventeur: **Nicolai, Jean
F-75116 Paris (FR)**

(74) Mandataire:
**Schmit, Christian Norbert Marie et al
Cabinet Ballot-Schmit
7, rue Le Sueur
F-75116 Paris (FR)**

(56) Documents cités:
EP-A- 0 005 841       EP-A- 0 181 112
EP-A- 0 444 617       EP-A- 0 493 226
US-A- 4 503 378

**Description**

La présente invention a pour objet un procédé de charge rapide d'une batterie, notamment d'une batterie de type cadmium-nickel (CdNi) ou de type nickel-metal-hydrure (NiMh). Ce procédé peut néanmoins être utile à charger tous types de batterie d'une manière rapide si les caractéristiques de charge de ces batteries sont similaires. L'invention à également pour objet un circuit intégré perfectionné apte à mettre en oeuvre le procédé de l'invention.

Pour charger rapidement une batterie CdNi ou Ni-Mh, il faut lui injecter un courant constant, d'autant plus important que l'on désire que la charge soit rapide. Par exemple, un courant de trois ampères permet de charger une batterie de un ampère/heure en un peu plus de vingt minutes. La difficulté consiste à déterminer quand arrêter la charge, sachant que quelques minutes de surcharge diminuent, par échauffement, la durée de vie de la batterie. Quelques dizaine de minutes excédentaires peuvent la mettre hors service ou la détruire. Le procédé de l'invention permet de stopper la charge avant que l'échauffement n'intervienne, et donc avant d'être en surcharge, cela sans nécessiter de capteur de température coûteux.

De nombreux procédés existent pour déterminer la fin de charge rapide d'une batterie lorsque celle-ci a atteint sa charge nominale. Ces procédés sont caractérisés par leur temps de réaction après la fin de charge. Celui-ci doit être le plus court possible. Ces procédés sont également caractérisés par leur fiabilité, leur répétitivité, et leur coût.

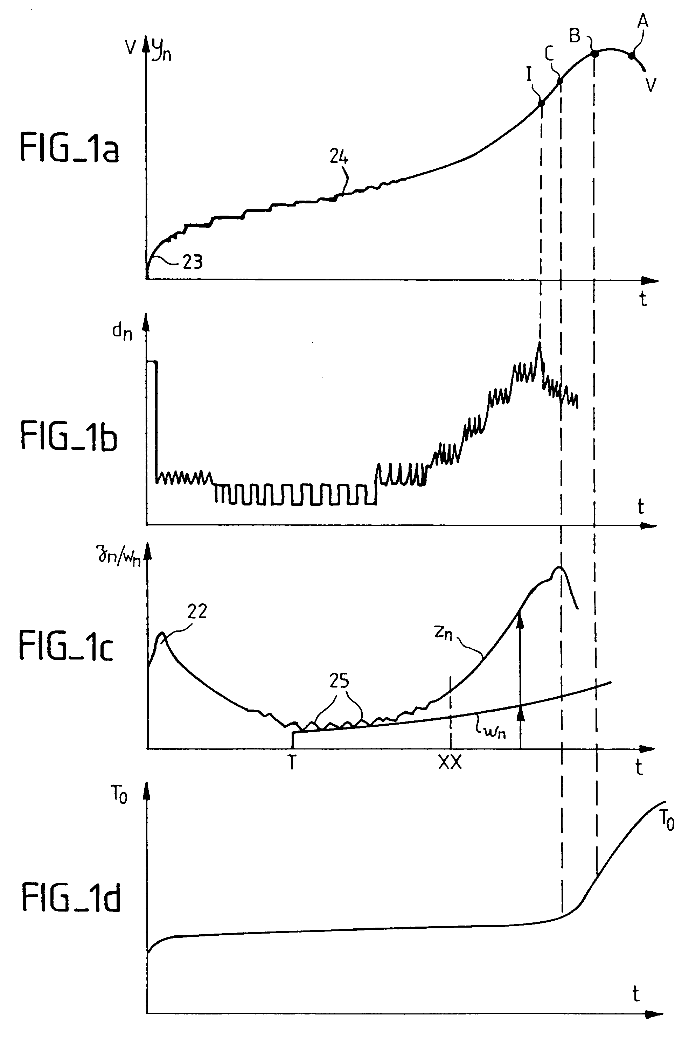

La méthode la plus classique est la méthode dite - delta V, ou delta V négatif. Cette méthode utilise la courbe caractéristique de tension de charge d'une batterie, par exemple de type cadmium-nickel. Cette courbe est représentée sur la Figure 1a. Quand la batterie est pleine, et même légèrement surchargée, la tension redescend légèrement, après avoir crû continuement pendant la charge. Cette baisse de tension est détectée par un circuit électronique de contrôle qui décide alors d'arrêter la charge. On peut par exemple détecter un delta V négatif de vingt millivolts pour arrêter la charge. Dans ce cas la charge est stoppée au point A sur la Figure 1a.

Cette méthode présente deux inconvénients. Premièrement, quand la tension redescend, la batterie est déjà légèrement surchargée et sa température a déjà commencé à croître. Il est donc déjà un peu tard, car c'est l'échauffement qui est la cause première du vieillissement des batteries. Cela est d'autant plus vrai que la charge est rapide. Plus le courant est fort, et plus la surcharge et la surchauffe sont importantes. Deuxièmement, les batteries de nouvelles technologies, à base de nickel-hydrure ont un delta V beaucoup moins accusé que les batteries au cadmium-nickel. Ce delta V est donc beaucoup plus difficile à détecter. De plus, ces dernières batteries s'échauffent beaucoup plus en fin de charge, et donc toute surcharge leur est beaucoup plus néfaste.

Notamment, leur durée de vie peut être réduite considérablement. La méthode du - delta V est donc inapplicable pour les batteries nickel-hydrure et, par ailleurs, elle réduit la durée de vie des batteries cadmium-nickel.

Une méthode plus récente consiste à mesurer la température de la batterie, et à décider l'arrêt de la charge quand le taux d'augmentation de la température dépasse un certain seuil. En effet, on voit, sur la Figure 1d, que la température reste constante pendant presque toute la charge. Elle commence à augmenter vers la fin de plus en plus fortement, notamment dans la dernière partie de la courbe. Avec cette méthode de mesure de température, la charge est stoppée à un point B, à un moment où la température augmente à une vitesse supérieure à un certain taux fixé par avance.

Un inconvénient de cette méthode est qu'elle nécessite un capteur de température sur chaque batterie, ainsi qu'un ou deux contacts supplémentaires à la connexion batterie-chargeur. Ceci est parfois d'un coût prohibitif. Un deuxième inconvénient de cette méthode est que la température se propage lentement du coeur de la batterie à sa périphérie puis au capteur. Autrement dit quand la charge est stoppée, la batterie a déjà eu le temps de trop chauffer.

Un rappel de ces caractéristiques est décrit dans l'article intitulé : "Nickel-Hydride Cells Avert Environmental Headaches", de Charles H. SMALL, publié dans la revue EDN du 10 décembre 1992, pages 156 à 161.

L'invention a pour objet de remédier aux inconvénients cités en proposant un procédé, et un circuit intégré mettant en oeuvre ce procédé, qui permettent d'arrêter les charges des batteries avant le moment où une surcharge, ou même une surchauffe, auront pu être décelées. Le principe de l'invention réside dans la surveillance de la courbe de variation de charge de la batterie en fonction du temps. En effet, on a remarqué dans l'invention que la tension aux bornes de la batterie croissait de plus en plus vite puis, avant d'atteindre son maximum, se mettait à croître moins vite. On a alors eu l'idée, plutôt que d'utiliser le signal de tension proprement dit, d'utiliser une dérivée, une variation, de ce signal de tension. Tant que cette dérivée, cette variation, croissent d'une période à une période suivante, on est dans une situation sans risque pour la batterie. Par contre, dès que le point d'inflexion de la courbe de tension est franchi, point I sur la courbe de la Figure la, on aborde la zone dangereuse. En pratique, on se sert de l'instant auquel on a repéré cette inflexion de la courbe de tension et on arrête la charge, de préférence avec un retard calibré, mesuré par rapport à cet instant. En pratique, de préférence, l'arrêt est donc provoqué au point C sur la Figure la. On constate que le point C se situe sur cette caractéristique avant le point A et même avant le point B de l'état de la technique. La détérioration des batteries est donc moindre.

L'invention a donc pour objet un procédé de charge rapide d'une batterie comportant les phases suivantes:

- on soumet la batterie à charger à un fort courant de charge,

- on mesure la tension de charge de la batterie pendant cette charge, et on obtient un premier signal de mesure,
- on élabore un deuxième signal de mesure représentatif de la variation de la tension de charge en calculant la différence entre deux échantillons du premier signal espacés d'une période déterminée,
- on détermine que la charge est nominale en repérant le moment où la variation de tension mesurée pendant une période devient moins grande qu'une variation de tension mesurée pendant une période précédente, et
- on arrête de charger cette batterie quand cette charge est nominale,

caractérisé en ce que pour déterminer que la tension mesurée pendant une période commence à croître moins vite que pendant une période précédente,
- on amortit une première fois le deuxième signal de mesure et on obtient un troisième signal (zn) de mesure,
- on amortit le troisième signal et on obtient un quatrième signal (wn) de mesure,
- on autorise à déterminer que la charge est nominale lorsqu'un rapport du premier signal au quatrième signal est plus grand qu'une valeur donnée, par exemple 1,25,
- on détecte l'instant où le troisième signal passe par un extrême, et
- on repère, en conséquence, ledit moment si l'autorisation a été donnée.

L'invention a également pour objet un circuit intégré muni de circuits et de connexions pour mesurer et commander la charge rapide d'une batterie, comportant un micro-processeur (13) en relation avec une mémoire programme (16), le circuit intégré comprenant des entrées pour mesurer la tension de charge de la batterie et une sortie produisant un signal d'arrêt de la charge, caractérisé en ce que le programme contenu dans cette mémoire programme comporte des instructions correspondant à toutes les étapes du procédé.

L'invention sera mieux comprise à la lecture de la description qui suit et l'examen des figures qui l'accompagnent. Celles-ci ne sont données qu'à titre indicatif et nullement limitatif de l'invention. Les figures montrent :

- figure 1a : la courbe caractéristique de charge d'une batterie de type cadmium-nickel déjà évoquée précédemment ;
- figure 1b : l'allure d'un signal de variation de la tension de la batterie (et non plus de la tension de la batterie elle-même) après conversion numérique ;
- figure 1c : le résultat d'un traitement de filtrage appliqué à la mesure numérique de la variation de la tension, pour en extraire un signal exploitable de manière préférentielle ;

- figure 1d : la courbe caractéristique d'évolution de la température de la batterie au cours de la charge;
- figure 2 : la représentation schématique d'un circuit intégré utilisable pour mettre en oeuvre le procédé de l'invention ;
- figure 3 : un organigramme des opérations à mettre en oeuvre dans une variante préférée du procédé de l'invention ;
- figure 4 : schéma d'un circuit préféré de charge à courant constant de la batterie.

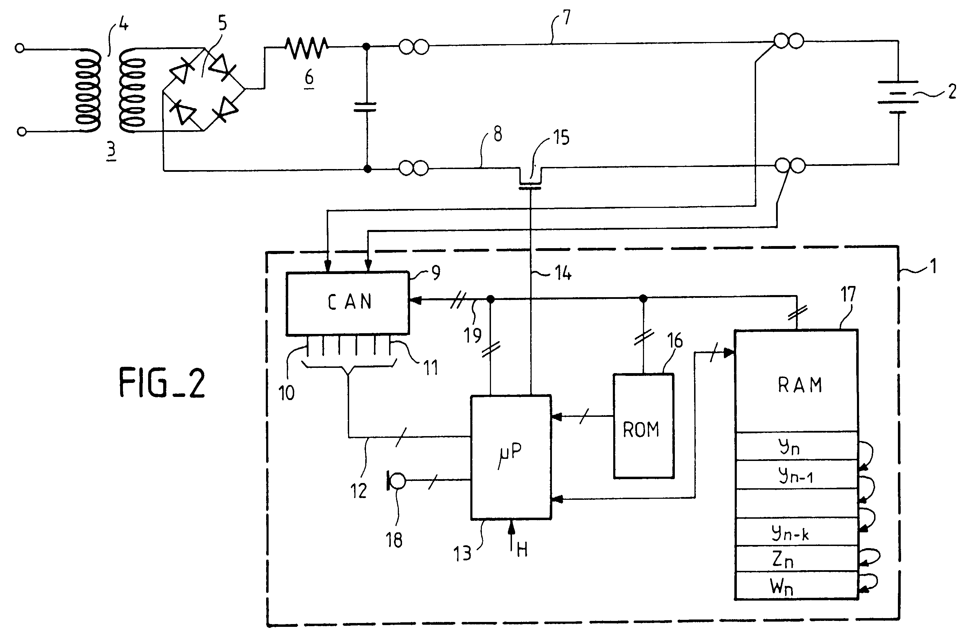

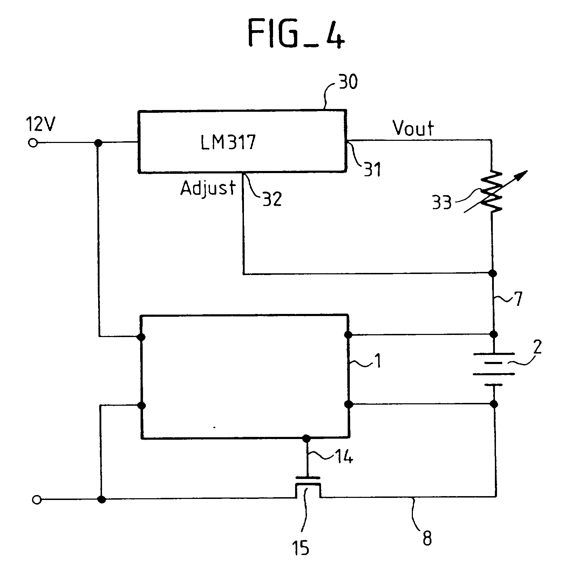

La figure 2 montre un circuit intégré 1 utilisable pour mettre en oeuvre le procédé de l'invention afin de charger une batterie 2 à partir d'une source de courant 3. La source de courant 3 est représentée ici d'une manière schématique avec un transformateur 4, un pont redresseur 5 et un filtre 6. La figure 4 montrera une variante préférée de réalisation d'un circuit débitant un courant de charge fort et constant. La batterie 2 est reliée par des connexions 7 et 8 au circuit de charge 3.

Dans le mode de réalisation préféré de l'invention, on mesure avec un convertisseur analogique numérique 9, périodiquement, la tension de charge de la batterie pendant sa charge. Cette tension est prélevée par exemple par branchement du convertisseur analogique numérique 9 aux connexions 7 et 8. Le convertisseur analogique numérique 9 produit un signal de mesure en mode binaire disponible sur ses sorties 10 à 11. Les sorties 10 à 11 du convertisseur analogique numérique 9 sont reliées par un bus 12 du circuit intégré à un micro-processeur 13 qui gère les mesures et qui produit un signal d'arrêt de la charge quand la charge est nominale.

Ce signal d'arrêt de la charge est par exemple un niveau logique disponible sur une connexion 14 en sortie du micro-processeur 13 et aboutissant sur un transistor de passage 15 interposé dans l'une des connexions 7 ou 8. On peut adopter d'autres circuits d'arrêt de la charge: celui représenté n'étant montré qu'à titre indicatif. Notamment, le redresseur 5 peut être un redresseur piloté par le micro-processeur 13, auquel cas ce redresseur 5 peut, le moment venu, être invalidé.

Le micro-processeur 13 est en relation avec une mémoire programme 16 du type non-volatile (ROM). Cette mémoire 16 contient les instructions correspondant à l'exécution des étapes du procédé. Au moment de la mise sous-tension de l'ensemble, le micro-processeur 13 peut transférer les instructions contenues dans la mémoire 16 dans une mémoire de travail 17 de type à accès aléatoire également reliée au micro-processeur 13. Selon le type de micro-processeur utilisé, il pourra aussi lui être possible d'exécuter les instructions lues directement dans la mémoire non-volatile 16. La mémoire à accès aléatoire volatile 17 comporte, par ailleurs, un jeu de registres utilisables pour stocker les valeurs de variables de travail élaborées dans les différentes phases du procédé.

Le micro-processeur 13 peut enfin être relié à un circuit d'alarme 18 comportant par exemple une lampe ou un haut-parleur. Le micro-processeur 13 reçoit un signal d'horloge H et émet, par ailleurs, sur un bus de commande 19 des ordres à destination des mémoires 16 et 17 et du convertisseur analogique numérique 9. Notamment, le cadencement de l'échantillonnage effectué par le convertisseur analogique numérique 9 est provoqué par le micro-processeur 13. Dans un exemple, ce cadencement est de l'ordre de une mesure par seconde.

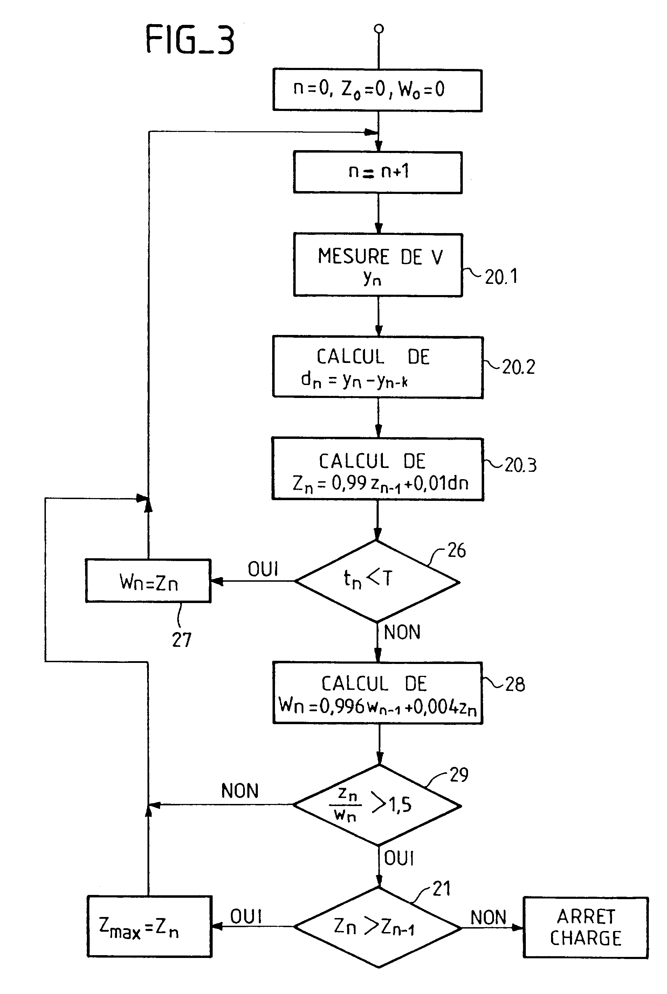

Sur la figure 3, on reconnaît les principales étapes d'une mise en oeuvre préférée du procédé de l'invention. Le procédé commence par une initialisation des variables d'état du système. Notamment, on met à zéro un indice n repérant le rang temporel de chacun des échantillons, ainsi que deux variables z et w, dont on expliquera la signification par la suite. L'initialisation n'est pas nécessairement une initialisation à une valeur nulle. La notion de rang n'est par ailleurs pas indispensable. Elle n'est utile que si on veut, dans la mémoire de travail 17, limiter le nombre de registre d'état dont on veut se servir. Le cadencement du convertisseur analogique numérique 9, ainsi que la suite de toutes les opérations montrées sur la figure 3 correspond à chaque fois à une valeur donnée du rang. Les traitements sont menés à terme dans la durée, à peu près une seconde, qui sépare chacune des mesures.

Dans un premier temps, le convertisseur analogique numérique 9 échantillonne la mesure de la tension V à l'étape 20.1 et produit un premier signal numérisé de mesure $Y_n$. Dans une étape 20.2 consécutive à l'étape 20.1 on calcule à partir de $Y_n$ une dérivée ou pseudo dérivée

$d_n = y_n - y_{n-k}$. Le signal $d_n$, dit deuxième signal, est montré sur la Figure 1b. Le signal $d_n$, qui représente la variation de la tension de batterie, subit des marches d'escaliers qui sont dues à la quantification du convertisseur analogique numérique 9. Ce signal n'est pas facilement exploitable compte-tenu de son caractère erratique. Cependant, on pourrait imaginer de l'exploiter tel que pour repérer son maximum correspondant au point d'inflexion I de la Figure 1a. Il suffirait de repérer l'instant où ce signal $d_n$ deviendrait supérieur à un seuil prédéterminé.

La constante k est par exemple fixée à 10. Le deuxième signal ainsi élaboré, $d_n$, est représentatif de la variation de la tension de charge au cours d'une période. La durée de cette période est de k échantillons. Ce n'est pas exactement une dérivée, mais une approximation simple qui a l'avantage par ailleurs d'être calculée facilement par le micro-processeur 13 compte-tenu de ce qu'il n'y a qu'une soustraction à faire. Une division par k est omise puisque k est constant d'un bout à l'autre du procédé. La valeur k peut être choisie en fonction du type de batteries à charger.

Dans le but de calculer $d_n$, on stockera d'une manière permanente dans la mémoire 17, les k derniers échantillons mesurés $y_n$ à $y_{n-k}$. Au moment où un nouvel échantillon est mesuré, il vient prendre la place du dernier échantillon $y_n$ mesuré, celui-ci prend la place de l'échantillon $y_{n-1}$, et ainsi de suite, l'ancien échantillon $y_{n-k}$ disparaissant. Ceci est représenté schématiquement sur la Figure 2 par des flèches de décalage du contenu des registres de la mémoire 17. En pratique, ceci peut-être effectué différemment en modifiant tout simplement les adresses des registres utiles.

Le signal $d_n$ est bruité du fait de la quantification dans le convertisseur analogique numérique 9. Les problèmes de quantification sont résolus en lissant la dérivée pour obtenir une dérivée lissée plus facilement exploitable. Ce lissage correspond à un amortissement appliqué sur le signal quantifié $d_n$ de façon à produire un troisième signal $z_n$ montré sur la Figure 1c. Le signal $z_n$ est obtenu au cours d'une étape 20.3 consécutive à l'étape 20.2 et dans laquelle on effectue le calcul suivant :

$z_n = 0,99 \, z_{n-1} + 0,01 \, d_n$. Cette méthode donne un lissage par calcul de la moyenne de la dérivée $d_n$.

Comme on désire détecter le point d'inflexion I de la courbe de la Figure 1a, on va repérer le sommet, la valeur extrême, de la valeur $z_n$, Figure 1c. Ceci est effectué au cours d'un test 21 au cours duquel on compare en permanence $z_n$ que l'on vient de calculer au $z_n$ précédent et stocké dans un registre.

Tant que la nouvelle valeur calculée pour $z_n$ est supérieure à la valeur $z_{n-1}$ précédente on n'a pas atteint le maximum. Dans ce cas, on remplace dans le registre $z_{max}$ de la mémoire 17, la valeur $z_{n-1}$ mémorisée par la nouvelle valeur $Z_n$ calculée. Par contre, lorsqu'on a passé le sommet, le résultat du test 21 devient négatif et dans ce cas on arrête la charge en émettant sur la connexion 14 l'ordre logique adéquat. On remarque en pratique que l'instant où on détecte le maximum est légèrement retardé par rapport au moment où le point d'inflexion de la tension est apparu. Ceci est dû au lissage de la dérivée. En pratique, le calcul que l'on a indiqué provoque un retard d'une centaine d'échantillons. On peut, en modifiant le calcul de l'étape 20.3, et/ou la fréquence de scrutation par le convertisseur analogique 9, modifier ce retard à la détection. Il semble cependant que la durée de cent secondes soit un compromis acceptable et qui permet en tout cas à un déclenchement en arrêt avant le point B.

Le déclenchement ainsi décrit de l'arrêt de la charge est automatique lorsqu'on est dans la partie significative droite de la courbe de la tension V. Un problème peut survenir qui consiste à distinguer le sommet de la dérivée lissée $z_n$, correspondant au point C, d'une part d'un sommet 22 situé au tout début de la courbe et d'autre part de nombreux autres maximum locaux 25 situés dans la partie médiane de la courbe. Le sommet 22 situé au début de la courbe est créé par les conditions d'initialisation des variables à zéro au début de la charge et par une diminution de la pente de la tension de batterie en début de charge. En effet, lors des premières secondes de connexion, la tension aux bornes de la batterie monte très rapidement : montée 23 Figure 1a. Puis elle redescend provoquant au passage le sommet 22 de la dérivée. Les maximums locaux 25 sont eux consécutifs à la quantification du convertisseur analogique numérique 9 dans une zone ou la pente de la courbe de la tension de charge est constante, zone 24 sur la Figure 1a.

Pour éliminer ces problèmes, et rendre le système complètement automatique au lieu que seulement sa fin ne le soit, on effectue deux opérations. D'une part, au cours d'un test 26, effectué après l'étape 20.3, on s'assure que la durée depuis le début de la charge est supérieure à une durée de base T. Par exemple, la durée T de base sera égale à cent secondes : égale à cent fois la durée qui sépare deux échantillons successifs. Tant que cette durée n'est pas atteinte, on calcule une variable $w_n$ correspondant à un quatrième signal selon un mode exprimé dans l'étape 27 : $w_n = z_n$. Ceci permet d'éviter des phénomènes transitoires qui se produisent au début de la charge.

Puis, après ce début de la charge, le calcul de la variable $w_n$ est entrepris comme indiqué à l'étape 28, en faisant en sorte que $w_n$ soit égal à

$$0,996 \, w_{n-1} + 0,004 \, z_n$$

Le calcul n'est en pratique effectué que si $w_n$ est inférieur à $z_n$. Si ce n'est pas le cas on remplace, pour le rang d'opérations considéré, $w_n$ par $z_n$.

Ceci revient à filtrer sur environ un millier d'échantillons la valeur de la dérivée (tout en ne gardant en mémoire que k échantillons). Le fait d'appliquer préalablement l'étape 27 permet de fixer d'une manière arbitraire la dérivée très amortie $w_n$ rapidement, à une valeur significative sans avoir besoin d'attendre qu'elle y monte. On repère ensuite que l'on est dans une partie significative d'évolution de la tension V en effectuant au cours d'un test 29 la comparaison de la dérivée lissée $z_n$, troisième signal, à la dérivée très amortie $w_n$, quatrième signal. Cette comparaison est entreprise sous la forme d'un rapport. Tant que la dérivée ne dépasse pas la dérivée moyenne à long terme de plus de cinquante pour cent on considérera que le test 29 est négatif et on laissera la charge se poursuivre. On a retenu cinquante pour cent mais évidemment on pourrait retenir un autre rapport, par exemple vingt cinq pour cent ou même éventuellement soixante dix ou quatre vingt pour cent. Au besoin on pourrait utiliser ce test, pour arrêter la charge.

Dès que le résultat du test 29 devient positif, on est dans la phase significative de mesure et on peut, en effectuant le test 21, repérer la valeur maximum $z_n$. On considère en effet lorsque le test 29 est positif que la tension de batterie est entrée dans une phase d'augmentation rapide de sa pente. Ceci ne se produit que dans cette zone de la courbe de charge, quel que soit le type de la batterie. Ceci permet d'isoler la période, située à droite d'une durée XX à partir de laquelle la dérivée lissée $z_n$ ne présente plus de maxima locaux ou autres singularités. Il est donc facile à partir de ce point de détecter le sommet de cette dérivée lissée.

Dans l'invention pour que l'organigramme de la Figure 3 fonctionne au mieux, il est préférable d'avoir une source de courant qui ne varie pas avec la tension débitée, ou avec le temps, ou la température du circuit d'alimentation. La figure 4 montre un exemple préféré de réalisation d'une telle source de courant stable dans le temps et indépendante de la variation de la tension d'alimentation. Une alimentation stabilisée en tension non représenté alimente sous 12 volts, le circuit intégré 1 ainsi qu'un circuit 30, de type LM 317 de SGS THIOMSON MICROELECTRONICS. Ce circuit 30 comporte deux sorties 31 et 32, dites Vout et Adjust, entre lesquelles on peut mettre en parallèle une résistance de réglage 33. La résistance 33 permet d'imposer à la batterie 2 une tension disponible à la sortie 32 et un courant égal au rapport de la différence de tension entre les sorties 31 et 32 par la valeur de la résistance 33. Le circuit LM 317 impose une tension Vout-Vadjust égale à une référence de 1,27 Volts. Donc le courant constant vaut I=1,27/résistance 33.

## Revendications

1. Procédé de charge rapide d'une batterie comportant les phases suivantes:

    - on soumet la batterie à charger à un fort courant de charge,
    - on mesure la tension de charge de la batterie pendant cette charge, et on obtient un premier signal (yn) de mesure,
    - on élabore un deuxième signal (dn) de mesure représentatif de la variation de la tension de charge en calculant la différence entre deux échantillons du premier signal espacés d'une période déterminée,
    - on détermine que la charge est nominale en repérant le moment où la variation (dn) de tension mesurée pendant une période devient moins grande qu'une variation de tension mesurée pendant une période précédente, et
    - on arrête de charger cette batterie quand cette charge est nominale,

        caractérisé en ce que pour déterminer que la tension mesurée pendant une période commence à croître moins vite que pendant une période précédente,
    - on amortit une première fois le deuxième signal de mesure et on obtient un troisième signal (zn) de mesure,
    - on amortit le troisième signal et on obtient un quatrième signal (wn) de mesure,
    - on autorise à déterminer que la charge est nominale lorsqu'un rapport du premier signal au quatrième signal est plus grand qu'une valeur donnée, par exemple 1, 25,
    - on détecte l'instant où le troisième signal passe par un extrême, et

- on repère, en conséquence, ledit moment si l'autorisation a été donnée.

2. Procédé selon la revendications 1, caractérisé en ce que pour déterminer que la tension mesurée pendant une période commence à croître moins vite que pendant une période précédente,

   - on attend un certain nombre de périodes (T) avant d'autoriser cette détermination.

3. Procédé selon l'une des revendications 1 à 2, caractérisé en ce que

   - on charge la batterie à courant rigoureusement constant.

4. Procédé selon l'une des revendications 1 à 3, caractérisé en ce que

   - on mesure périodiquement (H) la tension de charge de la batterie.

5. Procédé selon l'une des revendications 1 à 4, caractérisé en ce que

   - on détermine que la charge est nominale à un moment retardé (C) par rapport au moment repéré (I).

6. Circuit intégré muni de circuits et de connexions pour mesurer et commander la charge rapide d'une batterie, comportant un micro-processeur (13) en relation avec une mémoire programme (16), le circuit intégré comprenant des entrées pour mesurer la tension de charge de la batterie et une sortie produisant un signal d'arrêt de la charge, caractérisé en ce que le programme contenu dans cette mémoire programme comporte des instructions correspondant à toutes les étapes du procédé selon l'une quelconque des revendications 1 à 5.

7. Circuit selon la revendication 6 caractérisé en ce qu'il comporte un convertisseur analogique numérique (9) pour convertir la valeur de la tension de la batterie en un signal binaire.

8. Circuit selon la revendication 6 ou la revendication 7, caractérisé en ce qu'il comporte un générateur de courant stable réglable du type LM 317.

**Patentansprüche**

1. Schnelladeverfahren für eine Batterie, umfassend die folgenden Phasen:

   - die zu ladende Batterie wird mit einem starken Ladestrom beaufschlagt,
   - während dieses Ladens wird die Ladespannung der Batterie gemessen und ein erstes Meßsignal (yn) ermittelt,
   - ein zweites, die Änderung der Ladespannung darstellendes Meßsignal (dn) wird erzeugt, indem die Differenz zwischen zwei eine vorbestimmte Zeitdauer beabstandeten Werten des ersten Signals berechnet wird,
   - der Nennladezustand wird ermittelt, indem der Zeitpunkt bestimmt wird, zu dem die während einer Zeitdauer gemessene Spannungsänderung (dn) kleiner wird als eine während einer vorangehenden Zeitdauer gemessene Spannungsänderung, und
   - das Laden dieser Batterie wird beendet, wenn der Nennladezustand vorliegt,

   dadurch gekennzeichnet, daß zum Ermitteln, daß die während einer Zeitdauer gemessene Spannung langsamer als während einer vorangehenden Zeitdauer zu wachsen beginnt,

   - das zweite Meßsignal ein erstes Mal abgeschwächt und ein drittes Meßsignal (zn) ermittelt wird,

     das dritte Signal abgeschwächt und ein viertes Meßsignal (wn) ermittelt wird,
     die Ermittlung des Vorliegens des Nennladezustands freigegeben wird, wenn ein Verhältnis des ersten Signals zu dem vierten Signal größer ist als ein gegebener Wert, beispielsweise 1,25,
     der Augenblick erfaßt wird, in dem das dritte Signal durch einen Extremwert verläuft, und
     infolgedessen dieser Augenblick ermittelt wird, falls die Ermittlung freigegeben war.

2. Verfahren nach Anspruch 1, dadurch gekennzeichnet, daß zum Ermitteln, daß die während einer Zeitdauer gemessene Spannung langsamer als während einer vorangehenden Zeitdauer zu wachsen beginnt,

   - eine bestimmte Anzahl von Zeitdauern (T) gewartet wird, bevor diese Ermittlung freigegeben wird.

3. Verfahren nach einem der Ansprüche 1 bis 2, dadurch gekennzeichnet, daß

   - die Batterie mit einem streng konstanten Strom geladen wird.

4. Verfahren nach einem der Ansprüche 1 bis 3, dadurch gekennzeichnet, daß

- die Ladespannung der Batterie periodisch (H) gemessen wird.

**5.** Verfahren nach einem der Ansprüche 1 bis 4, dadurch gekennzeichnet, daß

- zu einem in Bezug auf den ermittelten Zeitpunkt (I) späteren Zeitpunkt (C) ermittelt wird, daß der Nennladezustand vorliegt.

**6.** Integrierte Schaltung mit Schaltungen und Verbindungen zum Messen und Steuern des Schnelladens einer Batterie, umfassend einen mit einem Programmspeicher (16) in Verbindung stehenden Mikroprozessor (13), wobei die integrierte Schaltung Eingänge zum Messen der Ladespannung der Batterie und einen ein Ausgang aufiveist, der ein Lade-Haltsignal erzeugt, dadurch gekennzeichnet, daß das in diesem Speicher enthaltene Programm Anweisungen umfaßt, die allen Schritten des Verfahrens nach einem der Ansprüche 1 bis 5 entsprechen.

**7.** Schaltung nach Anspruch 6, gekennzeichnet durch einen Analog-Digital-Umsetzer (9) zum Umsetzen des Spannungswerts der Batterie in ein binäres Signal.

**8.** Schaltung nach Anspruch 6 oder 7, gekennzeichnet durch einen regelbaren Konstantstromgenerator der Bauart LM 317.

**Claims**

**1.** Method for rapidly recharging a battery, including the following phases:

- the battery to be charged is subjected to a high charging current,

- the charging voltage of the battery is measured during this charging, and a first measurement signal (yn) is obtained,

- a second measurement signal (dn) representing the variation in the charging voltage is generated by calculating the difference between two samples of the first signal a predetermined period apart,

- it is determined that the charge is nominal by detecting the moment when the variation (dn) in the voltage measured over a period becomes smaller than a variation in voltage measured during a preceding period, and

- the charging of this battery is halted when this charge is nominal,
  characterised in that, in order to determine that the voltage measured over a period is beginning to rise less quickly than over a preceding period,

- the second measurement signal is damped a first time and a third measurement signal (zn) is obtained,

- the third signal is damped and a fourth measurement signal (wn) is obtained,

- a determination that the charge is nominal is authorised when the ratio between the first signal and the fourth signal is higher than a given value, for example 1:25,

- the instant when the third signal passes through an extreme is detected, and

- the said moment is, consequently, detected if the authorisation has been given.

**2.** Method according to Claim 1, characterised in that, in order to determine that the voltage measured over a period begins to rise less quickly than during a preceding period,

- a certain number of periods (T) are awaited before this determination is authorised.

**3.** Method according to one of Claims 1 to 2, characterised in that

- the battery is charged with a rigorously constant current.

**4.** Method according to one of Claims 1 to 3, characterised in that

- the charging voltage of the battery is measured periodically (H).

**5.** Method according to one of Claims 1 to 4, characterised in that

- it is determined that the charge is nominal at a moment which is retarded (C) with respect to the detected moment (I).

**6.** Integrated circuit provided with circuits and connections for measuring and controlling the rapid charging of a battery, having a microprocessor (13) connected to a program memory (16), the integrated circuit comprising inputs for measuring the charging voltage of the battery and an output producing a charge stop signal, characterised in that the program contained in this program memory includes instructions corresponding to all the steps in the method according to any one of Claims 1 to 5.

7. Circuit according to Claim 6, characterised in that it includes an analogue to digital converter (9) for converting the value of the voltage of the battery to a binary signal.

8. Circuit according to Claim 6 or Claim 7, characterised in that it includes an adjustable stable current generator of the LM 317 type.

FIG_1a

FIG_1b

FIG_1c

FIG_1d

FIG_2

# FIG_3

$$n = 0,\ Z_0 = 0,\ W_0 = 0$$

$$n = n+1$$

MESURE DE V
$y_n$    20.1

CALCUL DE
$d_n = y_n - y_{n-k}$    20.2

CALCUL DE
$Z_n = 0,99\, z_{n-1} + 0,01\, dn$    20.3

26
$t_n < T$

OUI → $W_n = Z_n$   27

NON

CALCUL DE
$W_n = 0,996\, w_{n-1} + 0,004\, z_n$    28

29
NON ← $\dfrac{z_n}{w_n} > 1,5$

OUI

21
$Z_n > Z_{n-1}$

OUI → $Z_{max} = Z_n$

NON → ARRET
CHARGE

# FIG_4